# EUROPEAN PATENT SPECIFICATION

(11) **EP 1 748 517 B1**
(45) Date of publication and mention of the grant of the patent: **27.11.2013**
(21) Application number: 06011450.1
(22) Date of filing: 02.06.2006
(51) Int. Cl.: H01Q 3/24, H04B 7/10, H01Q 1/24

(54) **Wireless electronic device with an omnidirectional and a directive antenna**
Drahtlose elektronische Vorrichtung mit einer Antenne mit Rundstrahlcharakteristik und einer Antenne mit Richtwirkung
Appareil electronique sans fil avec une antenne omnidirectionelle et une antenne directive

(30) Priority: 25.07.2005 CN 200510084914
(43) Date of publication of application: 31.01.2007
(73) Proprietor: ACER INCORPORATED, Taipei Hsien 221 (TW)
(72) Inventor: Lin, Yung-Sen, Hsichih Taipei Hsien 221 (TW)
(74) Representative: Flaccus, Rolf-Dieter

(56) References cited:
- US-A1- 2002 175 864
- US-A1- 2002 183 032
- US-A1- 2004 106 436
- US-A1- 2004 198 473

## Description

### Cross Reference to Related Applications

This application claims the right of priority based on Taiwan Patent Application No. 094124308 entitled "WIRELESS ELECTRONIC DEVICE AND METHOD FOR CONTROLLING THE WIRELESS ELECTRONIC DEVICE", filed on July 19, 2005, which is incorporated herein by reference and assigned to the assignee herein.

### Field of Invention

The present invention relates to a wireless electronic device, an antenna module, and a method for controlling the wireless electronic device.

### Background of the Invention

Under wireless LAN standards IEEE 802.11a or 802.11g, the wireless transmission rate has reached 30 Mbps and thus has made possible the wireless transmission of High Definition Digital TV (HDTV) signals. However, the transmission distance limits the transmission rate. If a user wants to watch HDTV on his wireless electronic device, his wireless electronic device must be placed within a limited distance to the HDTV signal source (e.g., an Access Point). US 2004/106436 pertains to a wireless LAN technology for reducing interference between (or among) wireless LAN access points. A wireless LAN access point is provided with a directional antenna, an interference detector detecting interference effected by another wireless LAN access point on the directional antenna, and a direction adjusting mechanism adjusting a maximum gain direction of the directional antenna in response to the detected interference.

US 2004/198473 discloses a system and method provided for diversifying radiated electromagnetic communications in a wireless telephone device. The method comprises: mounting antennas internal to a wireless telephone device chassis; sensing conducted electromagnetic transmission line signals communicated by the antennas; and, selecting between the antennas in response to sensing the transmission line signals.

US 2002/175864 teaches an antenna pair that has the advantages of easy installation and improved gain. The antenna pair consists of two slot antennas formed on a metallic strip and sharing a common portion of the strip as the grounding unit. The grounding portions of the antennas join together to become the grounding unit so as to increase the effective antenna aperture for both of the antennas and to raise their gains. As the antennas are combined into one, it is more manageable and handy for installation. The strip on which the slot antennas are formed is curved to have the antennas orthogonal to each other. The orthogonality brings about the space diversity effect and prevents the occurrence of any null in the radiation pattern of the antennas.

US 2002/183032 describes an electronic device having wireless communication functions via a pair of antennas. The device can function under two operating states, both with an omni-directional radiation pattern in the horizontal plane. This is accomplished by an antenna pair mounted separately thereon, the first antenna thereof being omni-directional in the horizontal plane when the device is operative under the first operating state, and the second antenna thereof being omni-directional in the horizontal plane when the device is operative under the second operating state. Also included in the device are a wireless communication module for encoding and decoding signals that are transmitted and received; a RF switch coupling the wireless communication module to the first antenna and second antenna for switching between the first antenna and second antenna; and a trigger switch for detecting the transition of the electronic device between the first operating state and second operating state that causes rotation in space of the antenna pair, and for triggering the RF switch in responsive thereto.

As known, in the wireless communication, the signal would be decayed along the transmission distance. That is, the longer transmission distance is involved, the lower transmission rate is allowed. As follows, three prior-art approaches to enhance the transmission rate with a given transmission distance are discussed.

The first one is to increase the outputting power of the wireless signal source, but it is impractical. In most countries, the outputting power of the wireless device is strictly regulated for healthy concerns. Moreover, high outputting power of one wireless device will interfere the signals from other wireless devices.

The second one is to increase the sensitivity of the processing circuits in the wireless electronic device. However, the manufacturing cost of this approach is too high to be generally adopted.

The third one is to increase the gain of the antenna. However, in the prior-arts, the wireless signal is transmitted or received via the same antenna. When the gain is increased, not only does the capability of signal receiving increase, but also the outputting power arises. Because of the outputting power is strictly regulated as mentioned above, this approach is also impractical.

### Summary of the Invention

The present invention is to provide a wireless electronic device, an antenna module, and a method for controlling the wireless electronic device.

One aspect of the present invention is to receive wireless signals via antennas having different gains. Another aspect of the present invention is to output wireless signals via a first antenna with a low gain and receive wireless signals via a second antenna with a high gain. Accordingly, the present invention supports the longer transmission distance or the higher transmission rate for receiving wireless signals, while avoids increasing the outputting power of the wireless signal source.

In one embodiment, disclosed is a wireless electronic device including a first antenna having a first gain, a second antenna having a second gain, and a processing circuit for alternatively performing a first mode or a second mode. When the first mode is performed, the processing circuit outputs wireless signals via the first antenna, and receives wireless signals via the first antenna. When the second mode is performed, the processing circuit outputs wireless signals via the first antenna, and receives wireless signals via the second antenna.

In another embodiment, disclosed is an antenna module used in a wireless electronic device for connecting with a wireless network. The wireless electronic device has a first mode and a second mode. The antenna module includes a first antenna having a first gain and a second antenna having a second gain. When the first mode is performed, the first antenna outputs and receives wireless signals for the wireless electronic device. When the second mode is performed, the first antenna outputs wireless signals for the wireless electronic device, and the second antenna receives wireless signals for the wireless electronic device.

Also disclosed is a method for controlling a wireless electronic device. The wireless electronic device has a first mode and a second mode. The method includes: (a) providing a first antenna, the first antenna having a first gain; (b) providing a second antenna, the second antenna having a second gain; (c) selectively performing the first mode or the second mode; (d) when the first mode is performed, outputting wireless signals via the first antenna, and receiving wireless signals via the first antenna; and (e) when the second mode is performed, outputting wireless signals via the first antenna, and receiving wireless signals via the second antenna.

The foregoing and other features of the invention will be apparent from the following more particular description of embodiment of the invention.

### Brief Description of the Drawings

The present invention is illustrated by way of example and not intended to be limited by the figures of the accompanying drawing, in which like notations indicate similar elements.

FIG. 1a illustrates a wireless electronic device according to an embodiment of the present invention;

FIG. 1b illustrates the first antennas 102a, 102b and the second antenna 104 according to an embodiment of the present invention;

FIG. 2a illustrates a switch circuit according to an embodiment of the present invention;

FIG. 2b illustrates a switch circuit according to another embodiment of the present invention;

FIG. 3 is a flowchart of a method according to an embodiment of the present invention.

### Detailed Description

The present invention directs to wireless electronic devices, such as PCs, laptop computers, PDAs, mobile phones, portable multimedia devices with the wireless communication functionality, or any other electronic devices having antennas for the wireless communication. The antenna can be a whip-like antenna, a slot antenna, an inverted-F antenna, a notch antenna, or any other antenna known to those skilled in the art. Also, the antenna is not limited to be omni-directional or directional, internal or external, single-band, dual-band, or tri-band antennas. In an embodiment, the antenna invention is configured to operate in the ISM and U-NII bands for WLAN applications. In another embodiment, the antenna is configured to operate under IEEE 802.11a or 802.11b for wireless communications. In still another embodiment, the antenna invention is configured to operate under Bluetooth protocol for wireless communications. However, the devices, elements, steps or operations in the following embodiments are provided for exemplary purposes only. Those skilled in the art should understand that the present invention is applicable to other wireless bands and other wireless electronics devices.

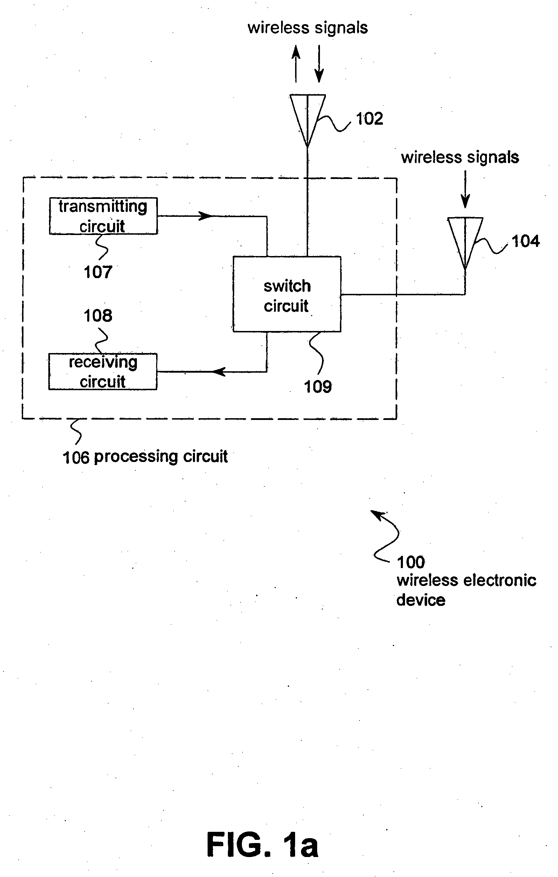

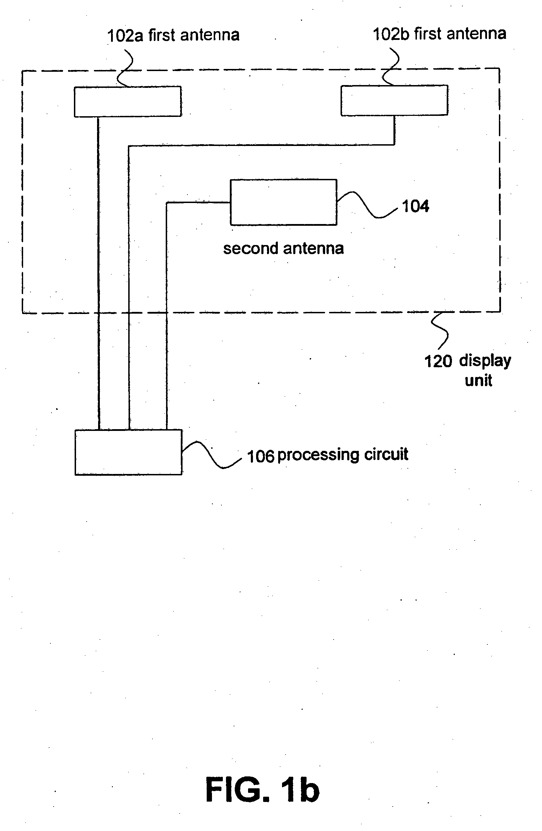

Referring to FIG. 1a, the wireless electronic device 100 includes a first antenna 102, a second antenna 104, and a processing circuit 106. The first antenna 102 has a first gain, and the second antenna 104 has a second gain. The present invention does not intend to limit the number of the first antenna 102 and the second antenna 104 adopted in the wireless electronic device 100. In one embodiment where the wireless electronic device 100 is implemented as a laptop, two first antennas 102a, 102b, and one second antenna 106 are disposed in the display unit 120 of the wireless electronic device 100, as shown in FIG. 1b. Like the WLAN antennas used in the conventional laptops, the first antennas 102a, 102b are omni-directional and have the gain equal to -3 dBi. The first antennas 102a, 102b are respectively disposed in the different positions on the top of the display unit 120, in order to obtain the better omni-directionality. The second antenna 104 and the first antennas 102a, 102b have the substantially identical working frequency. The second antenna 104 is preferably, but not limited to, a directional antenna and is disposed in the rear middle position of the display unit 120. The second antenna 104 has the gain equal to 2-3 dBi, greater than the gains of the first antennas 102a, 102b. In another embodiment, the first antenna 102 and the second antenna 104 disposed in an external antenna module (not shown), and the external antenna is inserted into the wireless electronic device 100 for transmitting/receiving wireless signals. Note that the gain of the second antenna 104 can be predetermined according to the distance of the wireless electronic device 100 to the wireless signal source or the required data transmission rate.

Again referring to FIG.1a, the wireless electronic device 100 has a first mode and a second mode, and the processing circuit 106 alternatively performs the first mode or the second mode. When the first mode is performed, the processing circuit 106 outputs wireless signals via the first antenna 102, and receives wireless signals via the first antenna 102. When the second mode is performed, the processing circuit 106 outputs wireless signals via the first antenna 102, and receives wireless signals via the second antenna 104. In another embodiment, when the second mode is performed, the processing circuit outputs wireless signals via the first antenna 102, and receives wireless signals further via the first antenna 102 and the second antenna 104.

The processing circuit 106 includes a transmitting circuit 107, a receiving circuit 108, and a switch circuit 109. The switch 109 is provided for switching between the first mode and the second mode. When the first mode is performed, the switch circuit 109 alternatively connects the transmitting circuit 107 to the first antenna 102 for transmitting the wireless signals, or connects the receiving circuit 108 to the first antenna 102 for receiving the wireless signals. When the second mode is performed, the switch circuit 109 alternatively connects the transmitting circuit 107 to the first antenna 102 for transmitting the wireless signals, or connects the receiving circuit 108 to the second antenna 104 for receiving the wireless signals.

The transmitting circuit 107 includes a transmitter, a filter, an oscillator, a mixer, an amplifier, and other conventional electronic devices for transmitting wireless signals. The receiving circuit 108 includes a receiver, a filter, an oscillator, a mixer, an amplifier, and other conventional electronic devices for receiving wireless signals. In one embodiment, the transmitting circuit 107 and the receiving circuit 108 are embodied as a transmitting circuit and a receiving circuit in a conventional laptop for transmitting and receiving WLAN signal, so the details of the transmitting circuit 107 and the receiving circuit 108 are omitted hereinafter.

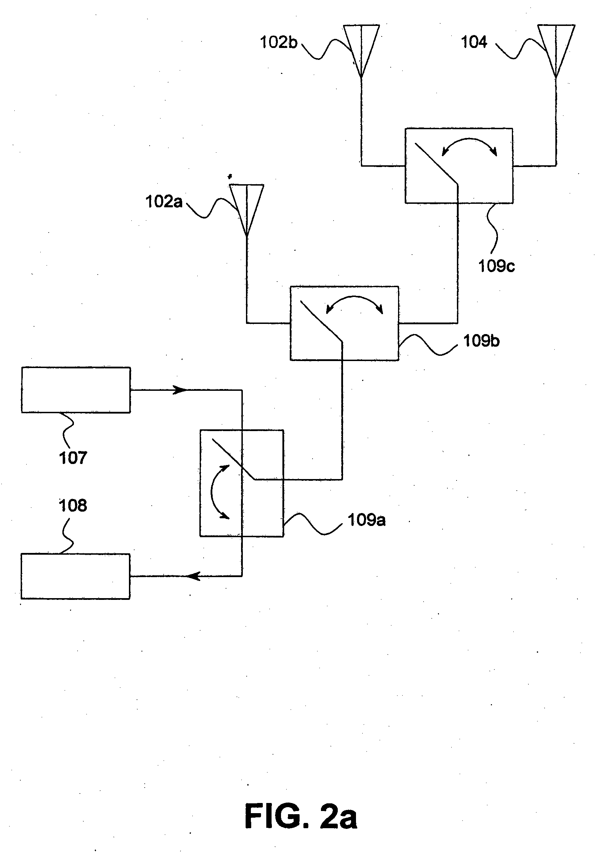

FIG. 2a illustrates the configuration of the switch circuit 109 according to an embodiment of the present invention. The switch circuit 109 includes switches 109a, 109b, and 109c. In the first mode, for transmitting wireless signals, the switch 109a connects the transmitting circuit 107 and the switch 109b, and the switch 109b is further connected to the first antenna 102a; for receiving wireless signals, the switch 109a connects the receiving circuit 108 and the switch 109b, the switch 109b is connected to the switch 109c, and the switch 109c is further connected to the first antenna 102b. Alternatively, in the first mode, while the first antenna 102a is configured to transmit wireless signals, it can also be configured to receive wireless signals; on the other hand, while the first antenna 102b is configured to transmit wireless signals, it can also be configured to receive wireless signals. In the second mode, for transmitting wireless signals, the switch 109a connects the transmitting circuit 107 and the switch 109b, and the switch 109b is further connected to the first antenna 102a for transmitting the wireless signals. Alternatively, the transmitting circuit 107 connects to the first antenna 102b via the switch 109a, 109b, and 109c for transmitting the wireless signals. In the second mode, for receiving wireless signals, the switch 109a connects the receiving circuit 108 and the switch 109b, the switch 109b is connected to the switch 109c, and the switch 109c is further connected to the second antenna 104.

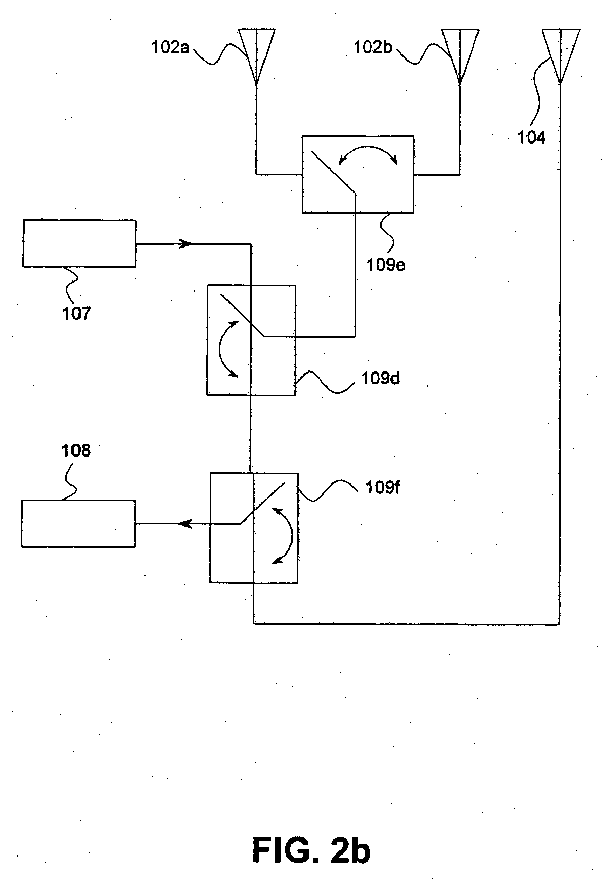

FIG. 2b illustrates the configuration of the switch circuit 109 according to another embodiment of the present invention. The switch circuit 109 includes switches 109d, 109e, and 109f. In the first mode, for transmitting wireless signals, the switch 109d connects the transmitting circuit 107 and the switch 109e, and the switch 109e is alternatively connected to the first antenna 102a or the first antenna 102b to obtain a better transmitting performance; for receiving wireless signals, the switch 109f connects the receiving circuit 108 and the switch 109d, the switch 109d is connected to the switch 109e, and the switch 109c is alternatively connected to the first antenna 102a or the first antenna 102b to obtain a better receiving performance, wherein while the first antenna 102a is configured to transmit wireless signals, it can also be configured to receive wireless signals, and on the other hand, while the first antenna 102b is configured to transmit wireless signals, it can also be configured to receive wireless signals. In the second mode, for transmitting wireless signals, the switch 109d connects the transmitting circuit 107 and the switch 109e, and the switch 109e is alternatively connected to the first antenna 102a or the first antenna 102b to obtain a better transmitting performance; for receiving wireless signals, the switch 109f connects the receiving circuit 108 and the second antenna 104.

Switches 109a -109f of the switch circuit 109 shown in FIG. 2a and FIG. 2b can be embodied as mechanical switches, electronic switches, or other conventional switches. Preferably, the processing circuit 109 controls the switch circuit according to a predetermined procedure. In an embodiment, when the processing circuit 109 is going to receive HDTV signals or the data transmission rate is up to 30 Mbps, the processing circuit 109 performs the second mode and generates a control signal (not shown) for the switch circuit 109. According to the control signal, the switch circuit 109 alternatively connects the transmitting circuit 107 to the first antenna 102 for transmitting the wireless signals, or connects the receiving circuit 108 to the second antenna 104 for receiving the wireless signals. Note that the user can input the control signal to control the switch circuit 109.

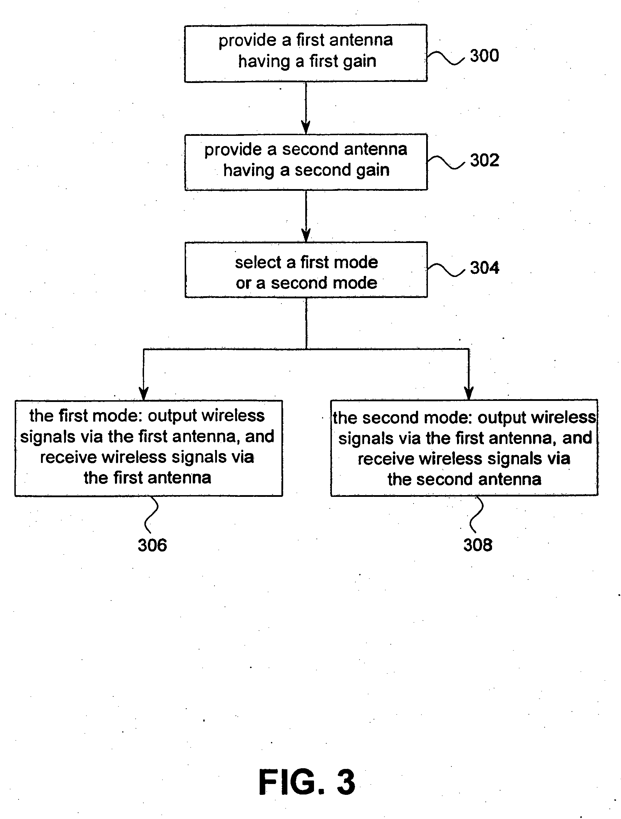

Cooperating with the wireless electronic device 100 of FIG. 1a, FIG. 3 is a flowchart of a method according to an embodiment of the present invention. In the step 300, providing a first antenna having a first gain. The first antenna can be implemented as two identical antennas 102a, 102b shown in FIG. 1a. In the step 302, providing a second antenna having a second gain. Preferably, the second gain is greater than the first gain. In the step 304, selectively performing the first mode or the second mode. Typically, the first mode is the default mode of the wireless electronic device 100. In the step 306 where the first mode is performed, outputting wireless signals via the first antenna 102, and receiving wireless signals via the first antenna 102. However, when the processing circuit 109 is going to receive HDTV signals or the data transmission rate is up to 30 Mbps, the step 308 rather than the step 306 is performed. In the step 308 where the second mode is performed, outputting wireless signals via the first antenna 102, and receiving wireless signals via the second antenna 104.

Further refer to the switch circuit 109 shown in FIG. 2a and FIG. 2b. In an embodiment, in the step 306, the switch circuit 109 alternatively connects the transmitting circuit 107 to the first antenna 102 for transmitting the wireless signals, or connects the receiving circuit 108 to the first antenna 102 for receiving the wireless signals. In another embodiment, in the step 308, the switch circuit 109 alternatively connects the transmitting circuit 107 to the first antenna 102 for transmitting the wireless signals, or connects the receiving circuit 108 to the second antenna 104 for receiving the wireless signals.

While this invention has been described with reference to the illustrative embodiments, these descriptions should not be construed in a limiting sense. Various modifications of the illustrative embodiment, as well as other embodiments of the invention, will be apparent upon reference to these descriptions. It is therefore contemplated that the appended claims will cover any such modifications or embodiments as falling within the true scope of the invention and its legal equivalents.

## Claims

1. An antenna module used in a wireless electronic device (100) for connecting with a wireless network, said wireless electronic device (100) having a first mode and a second mode, said antenna module having a first antenna (102, 102a, 102b) having a first gain and a second antenna (104) having a second gain, said antenna module being **characterized in that**
- when said first mode is performed, said first antenna (102, 102a, 102b) outputs and receives wireless signals for said wireless electronic device (100) ; and
- when said second mode is performed, said first antenna (102, 102a, 102b) outputs wireless signals for said wireless electronic device (100), and said second antenna (104) receives wireless signals for said wireless electronic device (100), and
- wherein the second gain is greater than the first gain.

2. An antenna module according to claim 1, wherein, when said second mode is performed, said first antenna (102, 102a, 102b) outputs wireless signals for said wireless electronic device (100), and said second antenna (104) together with said first antenna (102, 102a, 102b) receive wireless signals for said wireless electronic device (100).

3. An antenna module according to claim 1, wherein said first antenna (102, 102a, 102b) and said second antenna (104) have the substantially same working frequency.

4. An antenna module according to claim 1, wherein, when said second mode is performed, said second antenna (104) receives signals of High Definition Digital TV.

5. An antenna module according to claim 1, wherein said first antenna (102, 102a, 102b) is an omni-directional antenna, and said second antenna (104) is a directional antenna.

6. An antenna module according to claim 1, said wireless electronic device (100) comprising a transmitting circuit (107) and a receiving circuit (108), and said antenna module comprising a switch circuit (109) for switching between said first mode and said second mode,
- wherein, when said first mode is performed, said switch circuit (109) alternatively connects said transmitting circuit (107) to said first antenna (102, 102a, 102b) for transmitting said wireless signals, or connects said receiving circuit (108) to said first antenna (102, 102a, 102b) for receiving said wireless signals; and
- wherein, when said second mode is performed, said switch circuit (109) alternatively connects said transmitting circuit (107) to said first antenna (102, 102a, 102b) for transmitting said wireless signals, or connects said receiving circuit (108) to said second antenna (104) for receiving said wireless signals.

7. A wireless electronic device (100), **characterized by** using an antenna module according to claim 1.

8. A method for controlling a wireless electronic device (100) using a first antenna (102, 102a, 102b) and a second antenna (104), said wireless electronic device having a first mode and a second mode, said first antenna having a first gain and said second antenna having a second gain, wherein the second gain is greater than the first gain, said method being **characterized by**:
- selectively performing said first mode or said second mode;
- when said first mode is performed, outputting wireless signals via said first antenna, and receiving wireless signals via said first antenna; and
- when said second mode is performed, outputting wireless signals via said first antenna, and receiving wireless signals via said second antenna.

9. A method according to claim 8, wherein when said second mode is performed, outputting wireless signals via said first antenna (102, 102a, 102b), and receiving wireless signals further via said first antenna.

10. A method according to claim 8, wherein said first antenna (102, 102a, 102b) and said second antenna (104) have substantially the same working frequency.

11. A method according to claim 8, wherein, when said second mode is performed, said processing circuit receives signals of High Definition Digital TV via said second antenna.

12. A method according to claim 8, wherein said wireless electronic device (100) comprises a transmitting circuit and a receiving circuit;
- wherein when said first mode is performed, alternatively connecting said transmitting circuit to said first antenna (102, 102a, 102b) for transmitting said wireless signals, or connecting said receiving circuit to said first antenna for receiving said wireless signals; and
- wherein when said second mode is performed, alternatively connecting said transmitting circuit to said first antenna for transmitting said wireless signals, or connecting said receiving circuit to said second antenna for receiving said wireless signals.

## Patentansprüche

1. Antennenmodul, verwendet in einem drahtlosen elektronischen Gerät (100) für das Verbinden mit einem drahtlosen Netzwerk, wobei das drahtlose elektronische Gerät (100) einen ersten Modus und einen zweiten Modus aufweist und das Antennenmodul eine erste Antenne (102, 102a, 102b) mit einem ersten Gewinn und eine zweite Antenne (104) mit einem zweiten Gewinn aufweist, wobei das Antennenmodul **dadurch gekennzeichnet ist, dass**
- wenn der erste Modus ausgeführt wird, die erste Antenne (102, 102a, 102b) Funksignale für das drahtlose elektronische Gerät (100) ausgibt und empfängt; und
- wenn der zweite Modus ausgeführt wird, die erste Antenne (102, 102a, 102b) Funksignale für das drahtlose elektronische Gerät (100) ausgibt und die zweite Antenne (104) Funksignale für das drahtlose elektronische Gerät (100) empfängt, und
- der zweite Gewinn größer ist als der erste Gewinn.

2. Antennenmodul nach Anspruch 1, bei welchem bei Ausführung des zweiten Modus die erste Antenne (102, 102a, 102b) Funksignale für das drahtlose elektronische Gerät (100) ausgibt und die zweite Antenne (104) zusammen mit der ersten Antenne (102, 102a, 102b) Funksignale für das drahtlose elektronische Gerät (100) empfängt.

3. Antennenmodul nach Anspruch 1, bei welchem die erste Antenne (102, 102a, 102b) und die zweite Antenne (104) im Wesentlichen die gleiche Arbeitsfrequenz haben.

4. Antennenmodul nach Anspruch 1, bei welchem bei Ausführung des zweiten Modus die zweite Antenne (104) High-Definition-Digital-TV-Signale empfängt.

5. Antennenmodul nach Anspruch 1, bei welchem die erste Antenne (102, 102a, 102b) eine Rundstrahlantenne und die zweite Antenne (104) eine Richtantenne ist.

6. Antennenmodul nach Anspruch 1, wobei das drahtlose elektronische Gerät (100) eine Sendeschaltung (107) und eine Empfangsschaltung (108) umfasst und das Antennenmodul einen Schalterkreis (109) für das Umschalten zwischen dem ersten Modus und dem zweiten Modus umfasst, wobei
- bei Ausführung des ersten Modus der Schalterkreis (109) entweder die Sendeschaltung (107) mit der ersten Antenne (102, 102a, 102b), für das Senden der Funksignale, verbindet oder die Empfangsschaltung (108) mit der ersten Antenne (102, 102a, 102b), für das Empfangen der Funksignale, verbindet, und
- bei Ausführung des zweiten Modus der Schalterkreis (109) entweder die Sendeschaltung (107) mit der ersten Antenne (102, 102a, 102b), für das Senden der Funksignale, verbindet oder die Empfangsschaltung (108) mit der zweiten Antenne (104), für das Empfangen der Funksignale, verbindet.

7. Drahtloses elektronisches Gerät (100), **dadurch gekennzeichnet, dass** es ein Antennenmodul nach Anspruch 1 verwendet.

8. Verfahren zur Steuerung eines drahtlosen elektronischen Gerätes (100), das eine erste Antenne (102, 102a, 102b) und eine zweite Antenne (104) verwendet, wobei das drahtlose elektronische Gerät einen ersten Modus und einen zweiten Modus aufweist und die erste Antenne einen ersten Gewinn und die zweite Antenne einen zweiten Gewinn aufweist, wobei der zweite Gewinn größer ist als der erste Gewinn, wobei das Verfahren **gekennzeichnet ist durch**:
- selektives Ausführen des ersten Modus oder des zweiten Modus,
- bei Ausführen des ersten Modus Senden von Funksignalen über die erste Antenne und Empfangen von Funksignalen über die erste Antenne, und
- bei Ausführen des zweiten Modus Senden von Funksignalen über die erste Antenne und Empfangen von Funksignalen über die zweite Antenne.

9. Verfahren nach Anspruch 8, bei welchem beim Ausführen des zweiten Modus Funksignale über die erste Antenne (102, 102a, 102b) ausgegeben und des Weiteren Funksignale über die erste Antenne empfangen werden.

10. Verfahren nach Anspruch 8, bei welchem die erste Antenne (102, 102a, 102b) und die zweite Antenne (104) im Wesentlichen die gleiche Arbeitsfrequenz aufweisen.

11. Verfahren nach Anspruch 8, bei welchem beim Ausführen des zweiten Modus die Verarbeitungsschaltung über die zweite Antenne High-Definition-Digital-TV-Signale empfängt.

12. Verfahren nach Anspruch 8, bei welchem das drahtlose elektronische Gerät (100) eine Sendeschaltung und eine Empfangsschaltung umfasst und bei dem
- bei Ausführen des ersten Modus entweder die Sendeschaltung mit der ersten Antenne (102, 102a, 102b), für das Senden der Funksignale, verbunden wird oder die Empfangsschaltung mit der ersten Antenne, für das Empfangen der Funksignale, verbunden wird und
- bei Ausführen des zweiten Modus entweder die Sendeschaltung mit der ersten Antenne, für das Senden der Funksignale, verbunden wird oder die Empfangsschaltung mit der zweiten Antenne, für das Empfangen der Funksignale, verbunden wird.

## Revendications

1. Module d'antennes utilisé dans un dispositif électronique sans fil (100) pour une connexion avec un réseau sans fil, ledit dispositif électronique sans fil (100) ayant un premier mode et un deuxième mode, ledit module d'antennes ayant une première antenne (102, 102a, 102b) ayant un premier gain et une deuxième antenne (104) ayant un deuxième gain, ledit module d'antennes étant **caractérisé en ce que**
- lorsque ledit premier mode est exécuté, ladite première antenne (102, 102a, 102b) délivre en sortie et reçoit des signaux sans fil pour ledit dispositif électronique sans fil (100) ; et
- lorsque ledit deuxième mode est exécuté, ladite première antenne (102, 102a, 102b) délivre en sortie des signaux sans fil pour ledit dispositif électronique sans fil (100), et ladite deuxième antenne (104) reçoit des signaux sans fil pour ledit dispositif électronique sans fil (100), et
- dans lequel le deuxième gain est supérieur au premier gain.

2. Module d'antennes selon la revendication 1, dans lequel, lorsque ledit deuxième mode est exécuté, ladite première antenne (102, 102a, 102b) délivre en sortie des signaux sans fil pour ledit dispositif électronique sans fil (100), et ladite deuxième antenne (104), ainsi que ladite première antenne (102, 102a, 1 02b), reçoit des signaux sans fil pour ledit dispositif électronique sans fil (100).

3. Module d'antennes selon la revendication 1, dans lequel ladite première antenne (102, 102a, 102b) et ladite deuxième antenne (104) ont sensiblement la même fréquence de fonctionnement.

4. Module d'antennes selon la revendication 1, dans lequel, lorsque ledit deuxième mode est exécuté, ladite deuxième antenne (104) reçoit des signaux de télévision numérique haute définition.

5. Module d'antennes selon la revendication 1, dans lequel ladite première antenne (102, 102a, 102b) est une antenne omnidirectionnelle, et ladite deuxième antenne (104) est une antenne directionnelle.

6. Module d'antennes selon la revendication 1, ledit dispositif électronique sans fil (100) comprenant un circuit d'émission (107) et un circuit de réception (108), et ledit module d'antennes comprenant un circuit de commutation (109) pour commuter entre ledit premier mode et ledit deuxième mode,
- dans lequel, lorsque ledit premier mode est exécuté, ledit circuit de commutation (109) connecte de façon alternée ledit circuit d'émission (107) à ladite première antenne (102, 102a, 102b) pour émettre lesdits signaux sans fil, ou connecte ledit circuit de réception (108) à ladite première antenne (102, 102a, 102b) pour recevoir lesdits signaux sans fil ; et
- dans lequel, lorsque ledit deuxième mode est exécuté, ledit circuit de commutation (109) connecte de façon alternée ledit circuit d'émission (107) à ladite première antenne (102, 102a, 102b) pour émettre lesdits signaux sans fil, ou connecte ledit circuit de réception (108) à ladite deuxième antenne (104) pour recevoir lesdits signaux sans fil.

7. Dispositif électronique sans fil (100), **caractérisé par** l'utilisation d'un module d'antennes selon la revendication 1.

8. Procédé de commande d'un dispositif électronique sans fil (100) utilisant une première antenne (102, 102a, 102b) et une deuxième antenne (104), ledit dispositif électronique sans fil ayant un premier mode et un deuxième mode, ladite première antenne ayant un premier gain et ladite deuxième antenne ayant un deuxième gain, dans lequel le deuxième gain est supérieur au premier gain, ledit procédé étant **caractérisé par** :
- l'exécution sélective dudit premier mode ou dudit deuxième mode ;
- lorsque ledit premier mode est exécuté, la délivrance en sortie de signaux sans fil par l'intermédiaire de ladite première antenne, et la réception de signaux sans fil par l'intermédiaire de ladite première antenne ; et
- lorsque ledit deuxième mode est exécuté, la délivrance en sortie de signaux sans fil par l'intermédiaire de ladite première antenne, et la réception de signaux sans fil par l'intermédiaire de ladite deuxième antenne.

9. Procédé selon la revendication 8, dans lequel, lorsque ledit deuxième mode est exécuté, la délivrance en sortie de signaux sans fil par l'intermédiaire de ladite première antenne (102, 102a, 102b), et la réception de signaux sans fil par l'intermédiaire également de ladite première antenne.

10. Procédé selon la revendication 8, dans lequel ladite première antenne (102, 102a, 102b) et ladite deuxième antenne (104) ont sensiblement la même fréquence de fonctionnement.

11. Procédé selon la revendication 8, dans lequel, lorsque ledit deuxième mode est exécuté, ledit circuit de traitement reçoit des signaux de télévision numérique haute définition par l'intermédiaire de ladite deuxième antenne.

12. Procédé selon la revendication 8, dans lequel ledit dispositif électronique sans fil (100) comprend un circuit d'émission et un circuit de réception ;
- dans lequel, lorsque ledit premier mode est exécuté, la connexion de façon alternée dudit circuit d'émission à ladite première antenne (102, 102a, 102b) pour émettre lesdits signaux sans fil, ou la connexion dudit circuit de réception à ladite première antenne pour recevoir lesdits signaux sans fil ; et
- dans lequel, lorsque ledit deuxième mode est exécuté, la connexion de façon alternée dudit circuit d'émission à ladite première antenne pour émettre lesdits signaux sans fil, ou la connexion dudit circuit de réception à ladite deuxième antenne pour recevoir lesdits signaux sans fil.
